# EUROPÄISCHE PATENTSCHRIFT

(11) **EP 1 731 253 B1**
(45) Veröffentlichungstag und Bekanntmachung des Hinweises auf die Patenterteilung: **26.09.2007**
(21) Anmeldenummer: 06386013.4
(22) Anmeldetag: 26.05.2006
(51) Int. Cl.: B23K 9/32, B23K 9/29

(54) **Kopfbrenner mit einer federbelasteten Gasdüse zum Selbstreinigen und einem Gasverteilungsring**
Torch with a spring lasted gas nozzle for self-cleaning and a gas distribution ring
Torche avec une buse contrainte par un ressort pour autonettoyage et un anneau distributeur de gaz

(30) Priorität: 08.06.2005 GR 2005100285
(43) Veröffentlichungstag der Anmeldung: 13.12.2006
(73) Patentinhaber: Elas, Panagiotis, 40215 Düsseldorf (DE)
(72) Erfinder: Elas, Panagiotis, 40215 Düsseldorf (DE)

(56) Entgegenhaltungen:
- WO-A-95/07788
- JP-A- 10 225 772
- JP-A- 11 320 100
- US-A1- 2004 026 395
- US-B1- 6 248 977

## Beschreibung

Die Erfindung bezieht sich auf einen Halsbrennerkopf mit Druckfeder, welcher zur Anfangssituation zurückdrängt, und Teil des Selbstreinigungssystems ist. Es reinigt die Reste von der Gasdüse. Der Kopfbrenner verfügt außerdem über einen speziellen Ring zu Kanalisierung von Brenngas mit erarbeitenden spezialöffnungen im inneren Umriss

Die bisher gekannte Brennertechnologie hatte einen großen Nachteil wegen des freien Gaszulaufs. Mit der Benutzung dieses Kopfbrenners an der Gasdüse sammelten sich Brennreste, die mit Zeitverlust, Reinigungsarbeit und Verschleiß sowie eventueller Schadenzufügung verbunden war.
US 2004/0026395 A1, die als nächstliegenden Stand der Tecknik angesehen wird, betrifft einen Kopfbrenner, bei dem die Stromdüse im Düsenstock eingeschoben, nicht jedoch eingeschraubt wird. Über die Stromdüse wird ein Gasverteilerring (64) geworfen, der mit dem Düsenstock über ein Gewinde verschraubt wird. Durch die Kante des Gasverteilerrings, die auf dem Absatz der Stromdüse zu liegen kommt, wird die Stromdüse über die Verschraubung des Gasverteilerrings in Position gehalten.
WO 95/07788 betrifft ein Verfahren zum Reinigen einer Vorrichtung zum Schutzgasschweißen. Dabei kann der Verbund aus Stromdüse und Düsenstock gegenüber der Gasdüse verschoben werden, wobei durch eine eingelegte Feder eine Rückstellung ermöglichst wird.
Die Erfindung betrifft einen Kopfbrenner, bestehend aus folgenden Teilen:
einer Gasdüse (1), einer Keramik (2), einem Gasverteilerring (3), einer ersten Isolierhülse (4), einer Rückziehfeder (5), einer Stromdüse (6), einem Düsenstock (7), einer zweiten Isolierhülse (8), einer Gashülse (9) und einem Halsbrenner (10) mit der Rückziehfeder (5) angeordnet zwischen der ersten Isolierhülse (4) und der zweiten Isolierhülse (8), wobei beim Rückziehen der Gasdüse (1) nach hinten in Richtung des Halsbrenners die Rückziehfeder (5) zusammengepresst wird, so dass die Stromdüse (6) alle Brennreste von der Gasdüse (1) nach außen drängt, wodurch die Reinigung im Innern der Gasdüse (1) vollzogen wird, wobei der Gasverteilerring (3) zylinderförmig ist und in der ersten Isolierhülse (4) untergebracht ist und die Ventilfunktion übernimmt, wobei der zylinderförmige Gasverteilerring entlang seiner ganzen Länge eine glatte äußere Oberfläche aufweist.
Ein bevorzugter Kopfbrenner ist dadurch gekennzeichnet, dass der Gasverteilerring (3) über ein oder mehrere gleichmäßig verteilte Röhrchen im inneren Umriss verfügt, so dass in Zusammenarbeit mit dem Düsenstock (7) sich die entsprechende Anzahl kleiner Brenngas-Kanalisierungsleiter bildet.

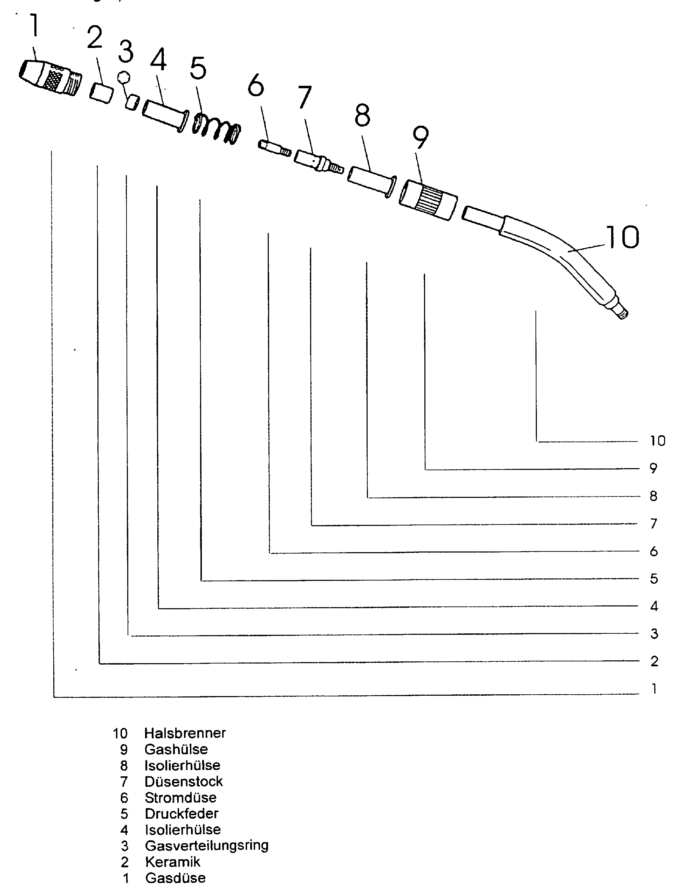

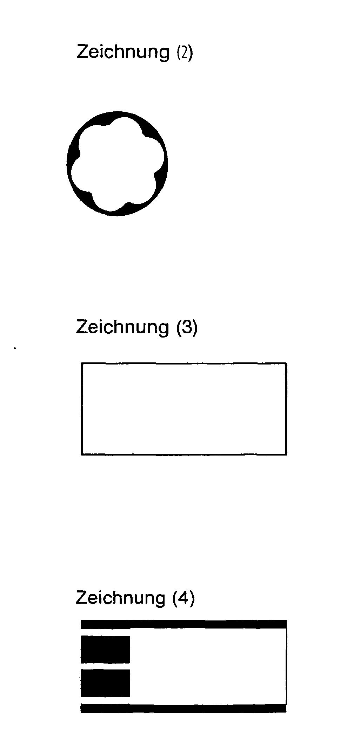

Die Zeichnung (1) zeigt die Teile, aus denen der Kopfbrenner besteht. Es sind folgende:
1 Gasdüse
2 Keramik
3 Gasverteilungsring
4 Isolierhülse
5 Druckfeder
6 Stromdüse
7 Düsenstock
8 isolierhülse
9 Gashülse
10 Halsbrenner
Die Vorteile dieser Erfindung sind folgende:

1. Große Gasenergie-Einsparung wegen der speziell gleichmäßigen Verteilung durch den Gasverteilerring
2. Die einfache, schnelle und vollständige Reinigung der Gasdüse mit minimalem Verschleiß. Die Reinigung wird dadurch durchgeführt, dass man mit der ersten Hand die Gasdüse festhält und mit der zweiten den Halsbrenner in die Richtung der Gasdüse zusammendrückt. Dabei werden die Brennreste von der Gasdüse nach außen abgeklebt (entfernt). Aufgrund der Druckfeder wird das System automatisch in die Anfangsposition zurückgesetzt.

Der Halsbrennerkopf wird durch diese Erfindung auch dadurch charakterisiert, dass mit dem Gasverteilungsring geringere Gasmenge verteilt mit jedoch größerer Stärke durch seiner kleinen Öffnungen sowie der von der leichten Handhabung des selbstreinigenden Mechanismus des Brenners.

Nach dieser Erfindung wird der Gasverbrauch für die gleiche Arbeit mit einem konventionellen Kopfbrenner um ca. 60% verringert und um ca. 70% weniger Verschleiß auf die Ersatzteile nachweist. Dadurch werden die Anschaffungskosten nach ca. 65 Arbeitsstunden amortisiert.

Die Zeichnung (1) zeigt die Teile des Kopfbrenners mit dem speziellen Gasverteilerring und die Teile, die durch die o.g. Bewegung das Selbstreinigungssystem dargestellt.

Die Zeichnung (2) zeigt seitlich den Gasverteilungsring mit den sechs kleinen Gasleitungsöffnungen.

Die Zeichnung (3) zeigt die Vorderseite des Gasverteilerrings.

Die Zeichnung (4) zeigt den Einschnitt des Gasverteilerrings.

## Patentansprüche

1. Kopfbrenner, bestehend aus folgenden Teilen:
einer Gasdüse (1), einer Keramik (2), einem Gasverteilerring (3), einer ersten Isolierhülse (4), einer Rückziehfeder (5), einer Stromdüse (6), einem Düsenstock (7), einer zweiten Isolierhülse (8), einer Gashülse (9) und einem Halsbrenner (10) mit der Rückziehfeder (5) angeordnet zwischen der ersten Isolierhülse (4) und der zweiten Isolierhülse (8), wobei beim Rückziehen der Gasdüse (1) nach hinten in Richtung des Halsbrenners (10) die Rückziehfeder (5) zusammengepresst wird, so dass die Stromdüse (6) alle Brennreste von der Gasdüse (1) nach außen drängt, wodurch die Reinigung im Innern der Gasdüse (1) vollzogen wird, wobei der Gasverteilerring (3) zylinderförmig ist und in der ersten Isolierhülse (4) untergebracht ist und die Ventilfunktion übernimmt, wobei der zylinderförmige Gasverteilerring (3) entlang seiner ganzen Länge eine glatte äußere Oberfläche aufweist.

2. Kopfbrenner nach Anspruch 1, **dadurch gekennzeichnet, dass** der Gasverteilerring (3) über ein oder mehrere gleichmäßig verteilte Röhrchen im inneren Umriss verfügt, so dass in Zusammenarbeit mit dem Düsenstock (7) sich die entsprechende Anzahl kleiner Brenngas-Kanalisierungsleiter bildet.

## Claims

1. End burner, composed of the following parts:
a gas nozzle (1), a ceramic (2), a gas distributor ring (3), a first isolating sleeve (4), a retraction spring (5), a flow nozzle (6), a nozzle assembly (7), a second isolating sleeve (8), a gas sleeve (9) and a throat burner (10) having the retraction spring (5) arranged between the first isolating sleeve (4) and the second isolating sleeve (8), wherein when the gas nozzle (1) is pulled back in the direction of the throat burner (10), the retraction spring (5) is compressed, so that the flow nozzle (6) forces all of the combustion residues out from the gas nozzle (1), thereby performing the cleaning in the interior of the gas nozzle (1), with the gas distributor ring (3) being cylinder-shaped and being accommodated in the first isolating sleeve (4) and assuming the valve function, with the cylinder-shaped gas distributor ring (3) having a smooth outer surface along its entire length.

2. End burner according to Claim 1, **characterized in that** the gas distributor ring (3) has one or more uniformly distributed tubes in the inner contour, so that, in interaction with the nozzle assembly (7), the corresponding number of small combustion gas ducting conductors are formed.

## Revendications

1. Torche constituée des pièces suivantes :
une buse à gaz (1), une céramique (2), un anneau distributeur de gaz (3), une première douille isolante (4), un ressort de rappel (5), une buse d'écoulement (6), un raccord de buse (7), une deuxième douille isolante (8), une douille à gaz (9) et un brûleur à col (10) avec le ressort de rappel (5) disposé entre la première douille isolante (4) et la deuxième douille isolante (8), lors du rappel de la buse à gaz (1) vers l'arrière dans la direction du brûleur à col (10), le ressort de rappel (5) étant comprimé, de sorte que la buse d'écoulement (6) repousse vers l'extérieur tous les résidus de combustion de la buse à gaz (1), de manière à effectuer le nettoyage à l'intérieur de la buse à gaz (1), l'anneau distributeur de gaz (3) ayant une forme cylindrique et étant monté dans la première douille isolante (4), et ayant une fonction de soupape, l'anneau distributeur de gaz (3) de forme cylindrique présentant le long de toute sa longueur une surface extérieure lisse.

2. Torche selon la revendication 1, **caractérisée en ce que** l'anneau distributeur de gaz (3) dispose d'un ou de plusieurs petits tubes répartis uniformément dans son pourtour intérieur, de sorte qu'en coopération avec le raccord de buse (7), il se forme le nombre correspondant de petits conducteurs de canalisation de gaz de combustion.
